# EUROPÄISCHE PATENTSCHRIFT

(11) **EP 1 350 552 B1**
(45) Veröffentlichungstag und Bekanntmachung des Hinweises auf die Patenterteilung: **02.01.2008**
(21) Anmeldenummer: 03006950.4
(22) Anmeldetag: 26.03.2003
(51) Int. Cl.: B01D 53/58, B01D 53/86

(54) **Verfahren und Vorrichtung zur Beseitigung von Ammoniak aus Abgasen**
Process and device for removing ammonia from exhaust gases
Procédé et dispositif pour éliminer l'ammoniac des gaz de fumée

(30) Priorität: 02.04.2002 DE 10214567
(43) Veröffentlichungstag der Anmeldung: 08.10.2003
(73) Patentinhaber: Schedler, Johannes, A-8410 Wildon (AT); Thalhammer, Heimo, Dr., A-8010 Graz (AT)
(72) Erfinder: Schedler, Johannes, A-8410 Wildon (AT); Thalhammer, Heimo, Dr., A-8010 Graz (AT); Belometti, Giampiero, 24124 Bergamo (IT); Neresini, Massimo Constantino, 36078 Valdagno (VI) (IT); Piva, Marco, 36100 Vicenza (IT)
(74) Vertreter: Haft, von Puttkamer, Berngruber

(56) Entgegenhaltungen:
- EP-B- 0 472 605
- DE-A- 4 204 603
- US-A- 5 874 053

## Beschreibung

Die Erfindung bezieht sich auf ein Verfahren zur Beseitigung von Ammoniak aus Abgasen nach dem Oberbegriff des Anspruchs 1. Sie hat auch eine Vorrichtung zur Durchführung dieses Verfahrens zum Gegenstand.

In einigen Industrien, z. B. in der lederverarbeitenden Industrie wird Abgas mit einem hohen Ammoniakgehalt freigesetzt. Die Abgase sind zudem oft mit Schwefelverbindungen verschiedenster Art als Geruchsstoffen belastet.

Die Reinigung dieses Abgases kann mit Säurewäschern erfolgen. (Siehe: EP0857509, US3950492) Wenn Schwefelsäure verwendet wird, entsteht ein Abwasser mit Ammoniumsulfat, welches zu entsorgen ist. Hohe Ammoniakkonzentrationen in der Abluft verursachen somit hohe Kosten für die einzusetzende Säure und hohe Abwasserentsorgungskosten.

Der Ammoniak im Abgas kann auch verbrannt werden. (Siehe: Steinbrunner K, Becker R, Seifert H, Verbrennung NH3-haltiger Prozeßgase,Chem.-Ing.-Tech. 67 (1995) Nr. 2, 199-202)
Dazu sind jedoch hohe Temperaturen von 800°C und mehr erforderlich. Zwar wird dabei der größte Teil des Ammoniaks zu Stickstoff umgesetzt, neben einem Restgehalt von einigen Prozent Ammoniak, wird jedoch ein Teil des Ammoniaks zu Stickoxiden (NOₓ und N₂O) weiteroxidiert, die seinerseits Umweltschadstoffe sind.

Zudem sind zur Ammoniak Minderung in Abgasen Katalysatoren bekannt, an welchen Ammoniak bei Sauerstoffüberschuß zu Stickstoff oxidiert wird. (Siehe: EP0686423, EP0706816)
Dafür geeignet sind im wesentlichen Katalysatoren auf Platinbasis. Nachteilig ist auch bei diesen Katalysatoren, daß als Nebenprodukt Stickoxide entstehen, wenn die Katalysatortemperatur so gewählt wird, dass der Ammoniak vollständig umgesetzt wird.
Bei hoher Ammoniakkonzentration kann auch die Wärmetönung am Katalysator so hoch werden, dass dieser Schaden leiden kann und die NOx-Bildung stark ansteigt. Vor allem aber ist der Katalysator gegenüber Katalysatorgiften, beispielsweise Schwefelverbindungen, die in Abgasen zusammen mit Ammoniak häufig vorkommen, anfällig.

Aus EP-A-0 472 605 ist bereits ein Verfahren nach dem Oberbegriff des Anspruchs 1 bekannt. Dabei kann ein Abschnitt der beiden Wärmespeichermassen, der einer geringeren Temperatur ausgesetzt ist, durch eine Katalysatormasse ersetzt sein, mit der ein Teil des Ammoniaks aus dem Rohgas adsorbiert wird, der im nächsten Zyklus dazu dient, Stickoxide, die durch Verbrennung des nichtadsorbierten Ammoniak im Brennraum entstehen, zu Stickstoff zu reduzieren. Es hat sich jedoch gezeigt, dass die Katalysatormasse durch die starken Temperaturschwankungen zerstört wird und Stickoxide nur unzureichend beseitigt werden.

Aufgabe der Erfindung ist es daher, Ammoniak aus Abgasen, ohne den Grenzwert von Stickoxiden oder dergleichen Sekundäremissionen zu überschreiten, mit hoher Ausbeute sowie hoher Wirtschaftlichkeit und Betriebssicherheit zu beseitigen.

Dies wird erfindungsgemäß mit dem im Anspruch 1 gekennzeichneten Verfahren erreicht. In den Ansprüchen 2 bis 12 sind vorteilhafte Ausgestaltungen des erfindungsgemäßen Verfahren wiedergegeben, und in den Ansprüchen 13 und 14 vorteilhafte Anwendungen des erfindungsgemäßen Verfahrens. Im Anspruch 15 ist eine bevorzugte Vorrichtung zur Durchführung des erfindungsgemäßen Verfahrens angegeben, welche durch die Maßnahmen der Ansprüche 16 bis 18 weiter ausgestaltet wird.

Nach der Erfindung wird das mit Ammoniak beladene rohe Abgas einer regenerativen thermischen Nachverbrennungsanlage zugeführt, also einer Anlage, in der das Ammoniak in einem Brennraum zwischen wenigstens zwei jeweils keramische Wärmespeichermassen aufweisenden Regeneratoren verbrannt wird, die unter regenerativer Wärmerückgewinnung wechselweise erwärmt und abgekühlt werden. Die Wärmespeichermassen können dabei aus prismenförmigen Wärmespeicherkörpern gebildet sein, deren Inneres eine Vielzahl von zur Prismenhauptachse parallelen Kanälen aufweist, wie in EP 0472605 B1 beschrieben.

Bei der thermischen Verbrennung des Ammoniaks entsteht in erster Linie Stickstoff, es werden jedoch auch Stickoxide (NOx) gebildet. Zudem bleibt eine Restmenge des Ammoniaks unverbrannt.

Da der NOx-Gehalt ansteigt, je höher der Ammoniakumsatz eingestellt wird, beträgt die Restmenge des Ammoniaks, der in der regenerativen thermischen Nachverbrennungsanlage nicht umgesetzt wird, beispielsweise höchstens 15 %, bezogen auf den Ammoniakgehalt in dem rohen Abgas.

Da die Stickoxide erfindungsgemäß anschließend in einer katalytischen Reduktionsanlage zu Stickstoff reduziert werden, soll die Ammoniakrestmenge, die unverbrannt bleibt, in Molprozenten jedoch höchstens der gebildeten Menge der Stickoxide entsprechen.

Das in der regenerativen thermischen Nachverbrennungsanlage vorgereinigte, eine geringe Restmenge an Ammoniak sowie Stickoxide enthaltende Abgas wird anschließend einer katalytischen Reduktions-, also einer SCR-Anlage zugeführt.

Während die Temperatur in der Brennkammer der regenerativen thermischen Nachverbrennungsanlage zur Verbrennung des Ammoniaks 700°C bis 1.000°C, vorzugsweise 800°C bis 900°C beträgt, liegt die Temperatur des Katalysators der katalytischen Reduktionsanlage vorzugsweise zwischen 180°C und 450°C, insbesondere zwischen 200°C und 350°C. Für die SCR-Anlage können handelsübliche DENOX-Wabenkatalysatoren verwendet werden, und zwar vorzugsweise auf Titandioxid-Basis, da diese gegenüber Katalysatorgiften und Schwefelverbindungen weitgehend unempfindlich sind.

Um die Stickoxide in der SCR-Anlage mit Ammoniak zu reduzieren, wird erfindungsgemäß ein kleiner Teilstrom des rohen, mit Ammoniak hoch belasteten Abgases der SCR-Anlage direkt geregelt zugeführt.

Die zur Umsetzung des Ammoniaks erforderliche Temperatur von z. B. 800°C bis 900°C in der Brennkammer der regenerativen thermischen Nachverbrennungsanlage kann gegenenfalls allein durch die Verbrennung des Ammoniaks entstehen. Bei Konzentrationen über 3 g/m³ ist sogar Überschußenergie vorhanden, die zur Erwärmung des vorgereinigten Gases in der SCR Anlage henutzt werden kann. Falls die Ammoniakkonzentration jedoch niedrig ist, wird die Brennraumtemperatur mit einem Brenner oder vergleichbaren Heizung auf der gewünschten Betriebstemperatur gehalten.

Ein Teil, beispielsweise 5 bis 25 Volumen % der heißen Brennkammerluft kann von der Brennkammer direkt zur Erwärmung des Katalysators der SCR-Anlage abgezweigt werden.

Das Abgas, welches aus der regenerativen thermischen Nachverbrennungsanlage mit einer Temperatur von beispielsweise 40°C bis 100°C austritt, wird zur weiteren Erwärmung durch einen Wärmetauscher geleitet, der auf der zweiten Seite von dem aus der SCR-Anlage austretenden Reingas erwärmt wird.
Um den Wärmetauscherverlust auszugleichen, wird nun die heiße Brennkammerluft dem aus dem Wärmetauscher austretenden vorgereinigten Abgas zugeführt.
Ferner kann beispielsweise zwischen diesem Wärmetaucher und der SCR-Anlage ein Brenner vorgesehen sein, der zum Anfahren und der Feineinstellung der Temperatur der in die SCR-Anlage eintretenden Abgase und damit dem Erreichen der optimalen Katalysatortemperatur in der SCR-Anlage dient.

Der Zusatz des rohen, ammoniakreichen Abgases zur Reduktion des NOx in dem in der regenerativen thermischen Nachverbrennungsanlage vorgereinigten Abgases wird so eingestellt, dass der NOx-Gehalt in dem aus der SCR-Anlage austretenden Reingas unter dem zulässigen Grenzwert liegt, der typischerweise etwa 50 mg/m³ beträgt. Ein geringer, wenn auch deutlich unter diesem Grenzwert liegender NOx-Gehalt wird jedoch in dem Reingas gelassen, weil sonst die Gefahr besteht, dass ein Teil des Ammoniaks, das der SCR-Anlage zugeführt wird, durchschlägt. Dabei ist zu berücksichtigen, dass der Grenzwert für Ammoniak wesentlich niedriger ist und typischerweise etwa 5 mg/m³ beträgt.

Demgemäß wird erfindungsgemäß der Zusatz des rohen, ammoniakreichen Abgases zu dem vorgereinigten Abgas aus der regenerativen thermischen Nachverbrennungsanlage durch die NOx-Konzentration in dem aus der SCR-Anlage austretenden Reingas geregelt. Dazu ist die Reingasleitung der SCR Anlage mit einem NOx-Meßgerät versehen, das ein Ventil ansteuert, das in der Bypass-Leitung vorgesehen ist, die die Rohgasleitung mit der Leitung für das vorgereinigte aus der regenerativen thermischen Nachverbrennungsanlage austretende Abgas verbindet.

Das erfindungsgemäße Verfahren wird insbesondere für Abgase mit einem Ammoniakgehalt von mehr als 1 g/m³, insbesondere 1 bis 20 g/m³, vorzugsweise 5 - 15 g/m³ verwendet. Bei einer Konzentration von weniger als 1 g/m³ kann sich die eingangs erwähnte Säurewäsche als wirtschaftlicher erweisen.

Abgase mit einem hohen Ammoniakgehalt treten insbesondere in der lederverarbeitenden Industrie auf. Die mit Ammoniak beladenen Abgase, insbesondere in der lederverarbeitenden Industrie, sind dabei häufig mit anderen Geruchsstoffen beladen, insbesondere mit Schwefelverbindungen, wie Schwefelwasserstoff und schwefelorganischen Verbindungen, wie Mercaptanen, sowie Aminen und dergleichen organischen Verbindungen. Diese Verbindungen werden erfindungsgemäß in der regenerativen thermischen Nachverbrennungsanlage vollständig verbrannt, so dass sie die Wirksamkeit der katalytischen Reduktion-, also SCR-Anlage nicht beeinträchtigen können.

Die Schwefelverbindungen in dem rohen Abgas werden in der regenerativen thermischen Nachverbrennungsanlage zu vorwiegend zu Schwefeldioxid und in geringem Maße zu Schwefeltrioxid verbrannt, das sich mit der im Abgas enthaltenen Wasser zu schwefeliger bzw. zu Schwefelsäure kondensiert, wenn der Taupunkt unterschritten wird, was zur Korrosion der Abgasleitungen der erfindungsgemäßen Vorrichtung nach der regenerativen thermischen Nachverbrennungsanlage führen würde. Um diese Korrosion zu verhindern, beträgt die Temperatur des aus der regenerativen thermischen Nachverbrennungsanlage austretenden vorgereinigten Abgase vorzugsweise mehr als 50°C, insbesondere mehr als 60°C und die Temperatur des aus dem Wärmetauscher nach der SCR-Anlage austretenden Reingases vorzugsweise mehr als 100°C, insbesondere mehr als 120°C.

Die Temperatur des Reingases in der Reingasleitung der erfindungsgemäßen Vorrichtung kann somit weiter genutzt werden, um ein anderes mit Schwefelverbindungen geruchsbelastetes Abgases so aufzuheizen, dass dieses eine Temperatur von mehr als 50°C, insbesondere mehr als 60°C erreicht, um die erwähnte Korrosion durch Taupunktunterschreitung zu verhindern. Dieses andere, mit Schwefelverbindungen belastete Abgas kann seinerseits einer regenerativen thermischen Nachverbrennungsanlage zugeführt werden.

Nach dem erfindungsgemäßen Verfahren wird also zur Beseitigung des Ammoniaks und der anderen Geruchsstoffe aus dem Abgas fast keine Energie verbraucht, vielmehr wird die Energie im wesentlichen allein aus der Verbrennung des Ammoniaks und der weiteren im Abgas enthaltenen Schwefel- oder organischen Verbindungen gewonnen und damit sowohl die regenerative Nachverbrennung, als aich die katalytische Reduktionsanlage betrieben.

Nachstehend ist die Erfindung anhand der beigefügten Zeichnung beispielhaft näher erläutert. Darin zeigen:
Figur 1 ein Ausführungsbeispiel einer erfindungsgemäßen Vorrichtung; und
Figur 2 ein Diagramm, das schematisch die Konzentration von Ammoniak und NOx in Abhängigkeit von der Temperatur bei der thermischen Ammoniakverbrennung wiedergibt.

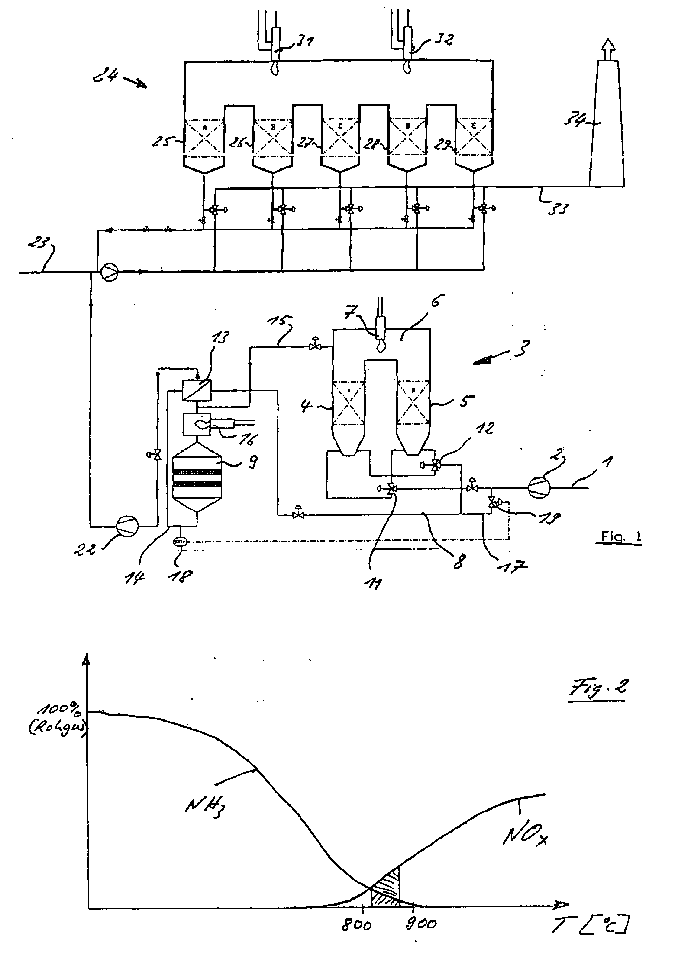

Gemäß Figur 1 wird ein mit Ammoniak- und Schwefelverbindungen als Geruchsstoffe belastetes Abgas in der Rohgasleitung 1 mit dem Gebläse 2 einer regenerativen thermischen Nachverbrennungsanlage 3 zugeführt.

Die regenerative thermische Nachverbrennungsanlage 3 besteht aus zwei Regeneratoren 4, 5, die mit keramischen vorzugsweise wabenförmigen Wärmespeicherkörpern gefüllt sind. Sie sind durch einen Brennraum 6 mit einem Brenner 7 oder dergleichen Heizung verbunden. Das rohe Abgas in der Leitung 1 wird den beiden Regeneratoren 4, 5, wechselweise zugeführt. Die Austrittseite der Regeneratoren 4, 5 ist mit der Leitung 8 verbunden, mit der das in der regenerativen Nachverbrennungsanlage 3 vorgereinigte Abgas der katalytischen Reduktions- oder SCR-Anlage 9 zugeführt wird. Zur wechselweisen Zufuhr des rohen Abgases der Rohgasleitung 1 bzw. Abfuhr des vorgereinigten Abgases in die Leitung 8 sind 3-Wegeventile 11, 12 vorgesehen.

Damit wird dem einen Regenerator, beispielsweise dem Regenerator 4, dessen Wärmespeicherkörper vorher auf z. B. 700°C bis 800°C erwärmt worden sind, das rohe, mit Ammoniak und Schwefelverbindungen belastete Abgas mit einer Temperatur von beispielsweise 30°C bis 50°C zugeführt. Das Abgas wird im Regenerator 4 auf 700°C bis 800°C erwärmt und strömt dann mit einer Verweilzeit von 0,5 bis 2 Sek. durch den Brennraum 6, wo es mit dem Brenner 7 auf eine Temperatur von 800°C bis 900°C erwärmt wird, um den Ammoniak und die Schwefelverbindungen zu verbrennen.

Die Konzentration des Ammoniaks in dem rohen Abgas in der Leitung 1 kann beispielsweise 5 bis 15 g/m³ betragen. Bei einer hohen Ammoniakkonzentration kann die Verbrennungswärme gegebenenfalls durch das Ammoniak selbst aufgebracht werden, so dass der Brenner 7 nicht eingeschaltet werden muss.

Das 800°C bis 900°C heiße vorgereinigte Abgas tritt dann in den Regenerator 5 ein, um dessen Wärmespeicherkörper aufzuheizen, bevor es aus dem Regenerator in die Leitung 8 eintritt. Das Umschalten von einen auf den anderen Regenerator 4, 5, erfolgt beispielsweise innerhalb von ein bis fünf Minuten.

Bei der Verbrennung von Ammoniak (NH₃) entstehen neben Stickstoff (N₂) auch Stickoxide (NOx). In Figur 2 ist die NH₃- und die NOx-Konzentration in Abhängigkeit von der Temperatur dargestellt. Da der NOx-Gehalt bei abnehmender NH₃-Konzentration mit zunehmender Temperatur ansteigt, beträgt die NH₃-Restmenge bei einer Verbrennungstemperatur von beispielsweise 850°C beispielsweise 5 % bezogen auf den NH₃-Gehalt von 100 % im Rohgas. Da das NOx in der SCR-Anlage 9 zu N₂ reduziert wird, soll die NH₃-Restmenge in dem vorgereinigten Abgas weniger als 15 % betragen, jedoch in Mol-% höchstens der Menge des NOx entsprechen, vorzugsweise der NOx-Gehalt also größer als der Ammoniakgehalt sein, wie durch den schraffierten Bereich in Figur 1 dargestellt. Die Temperatur in dem Brennraum 6 wird also so eingestellt, dass höchstens soviel Ammoniak in dem vorgereinigten Abgas verbleibt, wie Stickoxide gebildet werden. Die anderen Geruchsstoffe, wie Schwefelverbindungen oder organische Verbindungen werden im Brennraum 6 hingegen vollständig verbrannt.

Das vorgereinigte Abgas tritt in die Leitung 8 mit einer beispielsweise 20°C bis 40°C höheren Temperatur als in der Rohgasleitung 1, also beispielsweise mit 40°C bis 60°C ein und wird mit einem rekuperativen Wärmetauscher 13 auf beispielsweise 150°C bis 220°C erwärmt, der mit dem heißen aus der SCR-Anlage 9 austretenden Reingas aus der Reingasleitung 14 erwärmt wird.

Die Temperatur des Katalysators in der SCR-Anlage 9 kann beispielsweise etwa 300°C betragen. Um die Temperatur des vorgereinigten Abgases vor Eintritt in die SCR-Anlage 9 auf beispielsweise 280°C zu erhöhen, wird ein Teil, beispielsweise 5 bis 15 % der heißen Brennkammerluft mit Überschußenergie aus der Ammoniakverbrennung mit einer Temperatur von beispielsweise 800°C bis 900°C über die Leitung 15 dem vorgereingten Abgas nach dem Wärmetauscher 13 zugeführt. Der nachgeschaltete Brenner 16 oder dergleichen Heizung dient dann nur dem Anfahren der Anlage und der Temperaturfeineinstellung, sein Energieverbrauch ist also gering.

Über die Bypass-Leitung 17 zwischen der Rohgasleitung 1 und der Leitung 8 wird ein Teil des rohen Abgases der SCR-Anlage 9 zugeführt, um mit dem darin enthaltenen Ammoniak das NOx in dem mit der Anlage 3 vorgereinigten Abgases in der SCR-Anlage 9 stöchiometrisch in N₂ umzusetzen.

Der Zusatz des rohen Abgases aus der Rohgasleitung 1 zu dem vorgereinigten Abgas in der Leitung 8 wird durch die Konzentration der Stickoxide geregelt, die in dem aus der SCR-Anlage 9 austretenden Reingas enthalten sind. Dazu ist in der Reingasleitung 14 ein NOx-Meßgerät 18 vorgesehen, das das Regulierventil 19 in der Bypass-Leitung 17 über die Steuerleitung 21 ansteuert.

Bei einem zu geringen Ammoniakgerhalt in dem in die SCR-Anlage 9 eintretenden Abgas steigt der NOx-Wert im Reingas über einen vorgegebenen Wert an, wodurch das Messgerät 18 über die Steuerleitung 21 die Öffnung des Regulierventil 19 vergrößert. Ist zuviel Ammoniak in dem in der SCR-Anlage 9 eintretenden vorgereingten Abgas enthalten, steigt der Umsatz am Katalysator so weit an, dass der NOx-Wert unter den vorgegebenen Wert absinkt, wodurch die Öffnung des Regulierventil 19 verringert wird.

Der Katalysator in der SCR-Anlage 9 kann ein handelsüblicher zur Rauchgasreinigung bestimmter DENOX-Katalysator auf TiO₂-Basis sein. Derartige Katalysatoren sind gegenüber Schwefelverbindungen weitgehend resistent. Die über die Bypass-Leitung 17 zugeführte geringe Menge an Schwefelverbindungen führt daher zu keiner Beeinträchtigung der Wirksamkeit der SCR-Anlage 9.

Das auf beispielsweise 100°C bis 150°C erwärmte Reingas wird mit dem Gebläse 22 abgeführt.

Die Restwärme des Reingases kann einem anderen Abgas z. B. eine Hallenabluft mit einer geringeren Konzentration an Geruchsstoffen, wie Schwefelwasserstoff, Mercaptanen und Ammoniak, zugeführt werden, das über die Rohgasleitung 23 einer zweiten regenerativen thermischen Nachverbrennungsanlage 24 mit beispielsweise fünf Regeneratoren 25 bis 29 und zwei Brennern 31, 32 zugeführt wird. Die Regeneratoren 25 bis 29 werden so betrieben, dass zwei Regeneratoren beispielsweise 25 und 26, sich in der Abkühlphase und zwei Regeneratoren, z. B. 27 und 28, in der Aufheizphase befinden, während ein Regenerator, also 29, sich in der Spülphase befindet, in der Reingas aus der Reingasleitung 33, die zum Kamin 34 führt, zum Spülen verwendet wird.

## Patentansprüche

1. Verfahren zur Beseitigung von Ammoniak aus Abgasen mit einer regenerativen thermischen Nachverbrennungsanlage (3) zur thermischen Oxidation des Ammoniaks, in welcher der rohe Abgasstrom wechselweise in mindestens zwei Wärmespeichermassen aufweisenden, durch einen Brennraum (6) verbundenen Regeneratoren (4, 5) erwärmt und abgekühlt und der Ammoniak zu Stickstoff und Stickoxiden umgesetzt wird, **dadurch gekennzeichnet, dass** die Stickoxide in dem in der regenerativen thermischen Nachverbrennungsanlage (3) vorgereinigten Abgas anschließend durch Zusatz eines Teils des rohen Abgases in einer selektiven katalytischen Reduktionsanlage (9) zu Stickstoff reduziert werden.

2. Verfahren nach Anspruch 1, **dadurch gekennzeichnet, dass** die Temperatur in dem Brennraum (6) zur Umsetzung des Ammoniaks 700°C bis 1000°C beträgt.

3. Verfahren nach Anspruch 1 oder 2, **dadurch gekennzeichnet, dass** die Temperatur in dem Brennraum (6) so eingestellt wird, dass die Restmenge des in dem vorgereinigten Abgas enthaltenen Ammoniaks höchsten der gebildeten Menge der Stickoxide entspricht.

4. Verfahren nach einem der Ansprüche 1 bis 3, **dadurch gekennzeichnet, dass** die Verweilzeit in dem Brennraum (6) 0,5 bis 4 Sek. beträgt.

5. Verfahren nach Anspruch 1, **dadurch gekennzeichnet, dass** zur Aufheizung der katalytischen Reduktionsanlage (9) ein Teil der heißen Brennraumluft abgezweigt wird.

6. Verfahren nach Anspruch 5, **dadurch gekennzeichnet, dass** die heiße Brennraumluft dem vorgereinigten Abgas nach dem Wärmetauscher (13) vor dem Katalysator der katalytischen Reduktionsanlage (9) zugeführt wird.

7. Verfahren nach Anspruch 1 oder 5 **dadurch gekennzeichnet, dass** die Temperatur, auf die die katalytische Reduktionsanlage (9) erwärmt wird, 200°C bis 450°C beträgt.

8. Verfahren nach einem der vorstehenden Ansprüche, **dadurch gekennzeichnet, dass** für die katalytische Reduktionsanlage (9) ein Katalysator auf Titandioxid-Basis verwendet wird.

9. Verfahren nach Anspruch 1, **dadurch gekennzeichnet, dass** der Zusatz des rohen Abgases zu dem vorgereinigten Abgas durch die Konzentration der Stickoxide in dem aus der katalytischen Reduktionsanlage (9) austretenden Reingas geregelt wird.

10. Verfahren nach einem der vorstehenden Ansprüche, **dadurch gekennzeichnet, dass** das Abgas neben dem Ammoniak, Schwefel- und/oder organische Verbindungen als Geruchsstoffe enthält.

11. Verfahren nach einem der vorstehenden Ansprüche, **dadurch gekennzeichnet, dass** das aus der katalytischen Reduktionsanlage (9) austretende Reingas, gegebenenfalls nach Entzug eines Teils seiner Wärme, einem anderen geruchsbelasteten Abgas zur Abgabe seiner Restwärme zugeführt wird.

12. Verfahren nach Anspruch 11, **dadurch gekennzeichnet, dass** das andere geruchsbelastete Abgas in einer weiteren regenerativen thermischen Nachverbrennungsanlage (24) gereinigt wird.

13. Anwendung des Verfahrens nach einem der vorstehenden Ansprüche für Abgase mit einen Ammoniakgehalt von mehr als 1 g/m³.

14. Anwendung des Verfahrens nach einem der Ansprüche 1 bis 12 zur Reinigung von Abgasen in der lederverarbeitenden Industrie.

15. Vorrichtung zur Durchführung des Verfahrens nach einem der Ansprüche 1 bis 12, **gekennzeichnet durch** eine Rohgasleitung (1), mit der das rohe Abgas einer regenerativen thermischen Nachverbrennungsanlage (3) zugeführt wird, wobei das aus der regenerativen thermischen Nachverbrennungsanlage (3) austretende vorgereinigte Abgas über eine Leitung (8) einer katalytischen Reduktionsanlage (9) zugeführt wird, und eine Bypass-Leitung (17) zur Abzweigung eines Teils des Rohgases in der Rohgasleitung (1) zu dem vorgereinigten Abgas in der Leitung (8).

16. Vorrichtung nach Anspruch 15, **gekennzeichnet durch** eine an den Brennraum (6) der regenerativen thermischen Nachverbrennungsanlage (3) angeschlossene Leitung (15) zur Abzweigung eines Teils der heißen Brennraumluft zur Aufheizung der katalytischen Reduktionsanlage (9).

17. Vorrichtung nach Anspruch 16, **dadurch gekennzeichnet, dass** die an den Brennraum (6) angeschlossene Leitung (15) in die Leitung nach dem Wärmetauscher (13) für das vorgereinigte Abgas mündet.

18. Vorrichtung nach Anspruch 15, **dadurch gekennzeichnet, dass** in der Reingasleitung (14) nach der katalytischen Reduktionsanlage (9) ein Stickoxid-Meßgerät (18) und in der Bypass-Leitung (17) ein Ventil (19) vorgesehen ist, das von dem Stickoxidmessgerät (18) angesteuert wird.

## Claims

1. A method for removing ammonia from waste gases with a regenerative thermal post-combustion plant (3) for thermal oxidation of the ammonia, in which plant the raw waste gas stream is heated and cooled alternately in regenerators (4, 5) having at least two heat storage masses and connected by a combustion chamber (6), and the ammonia is converted to nitrogen and nitric oxides, **characterized in that** the nitric oxides in the waste gas precleaned in the regenerative thermal post-combustion plant (3) are subsequently reduced to nitrogen by addition of a portion of the raw waste gas in a selective catalytic reduction plant (9).

2. The method according to claim 1, **characterized in that** the temperature in the combustion chamber (6) for converting the ammonia is 700°C to 1000°C.

3. The method according to claim 1 or 2, **characterized in that** the temperature in the combustion chamber (6) is adjusted so that the remaining quantity of ammonia contained in the precleaned waste gas corresponds to no more than the formed quantity of nitric oxides.

4. The method according to any of claims 1 to 3, **characterized in that** the dwell time in the combustion chamber (6) is 0.5 to 4 sec.

5. The method according to claim 1, **characterized in that** a portion of the hot combustion chamber air is branched off for heating the catalytic reduction plant (9).

6. The method according to claim 5, **characterized in that** the hot combustion chamber air is supplied to the precleaned waste gas after the heat exchanger (13) before the catalyst of the catalytic reduction plant (9).

7. The method according to claim 1 or 5, **characterized in that** the temperature to which the catalytic reduction plant (9) is heated is 200°C to 450°C.

8. The method according to any of the above claims, **characterized in that** a catalyst based on titanium dioxide is used for the catalytic reduction plant (9).

9. The method according to claim 1, **characterized in that** the addition of raw waste gas to precleaned waste gas is regulated by the concentration of nitric oxides in the clean gas leaving the catalytic reduction plant (9).

10. The method according to any of the above claims, **characterized in that** the waste gas contains not only ammonia but also sulfur compounds and/or organic compounds as odorants.

11. The method according to any of the above claims, **characterized in that** the clean gas leaving the catalytic reduction plant (9), optionally after removal of a portion of its heat, is supplied to another odor-loaded waste gas for emitting its residual heat.

12. The method according to claim 11, **characterized in that** the other odor-loaded waste gas is cleaned in a further regenerative thermal post-combustion plant (24).

13. Application of the method according to any of the above claims for waste gases with an ammonia content of more than 1 g/m³.

14. Application of the method according to any of claims 1 to 12 for cleaning waste gases in the leather processing industry.

15. An apparatus for carrying out the method according to any of claims 1 to 12, **characterized by** a raw gas pipe (1) for supplying the raw waste gas to a regenerative thermal post-combustion plant (3), the precleaned waste gas leaving the regenerative thermal post-combustion plant (3) being supplied via a pipe (8) to a catalytic reduction plant (9), and a by-pass pipe (17) for branching off a portion of the raw gas in the raw gas pipe (1) to the precleaned waste gas in the pipe (8).

16. The apparatus according to claim 15, **characterized by** a pipe (15) connected to the combustion chamber (6) of the regenerative thermal post-combustion plant (3) for branching off a portion of the hot combustion chamber air for heating the catalytic reduction plant (9).

17. The apparatus according to claim 16, **characterized in that** the pipe (15) connected to the combustion chamber (6) opens into the pipe after the heat exchanger (13) for the precleaned waste gas.

18. The apparatus according to claim 15, **characterized in that** a nitric oxide meter (18) is provided in the clean gas pipe (14) after the catalytic reduction plant (9), and a valve (19) which is driven by the nitric oxide meter (18) is provided in the by-pass pipe (17).

## Revendications

1. Procédé pour éliminer l'ammoniac de gaz d'échappement, comportant une installation de postcombustion (3) thermique régénérative pour l'oxydation thermique de l'ammoniac, dans laquelle le flux de gaz d'échappement brut est alternativement chauffé et refroidi dans au moins deux régénérateurs (4, 5), présentant des masses d'accumulation thermique et reliés par une chambre de combustion (6), et l'ammoniac est converti en azote et en oxydes azotiques, **caractérisé en ce que** les oxydes azotiques dans le gaz d'échappement, préalablement épurés dans l'installation de postcombustion (3) thermique régénérative, sont ensuite réduits en azote par addition d'une partie du gaz d'échappement brut dans une installation de réduction (9) catalytique sélective.

2. Procédé selon la revendication 1, **caractérisé en ce que** la température dans la chambre de combustion (6) pour convertir l'ammoniac est de 700°C à 1000°C.

3. Procédé selon la revendication 1 ou 2, **caractérisé en ce que** la température dans la chambre de combustion (6) est réglée de telle sorte que la quantité résiduelle de l'ammoniac contenu dans le gaz d'échappement préalablement épuré correspond au plus à la quantité formée des oxydes azotiques.

4. Procédé selon l'une des revendications 1 à 3, **caractérisé en ce que** le temps de séjour dans la chambre de combustion (6) est de 0,5 à 4 secondes.

5. Procédé selon la revendication 1, **caractérisé en ce qu'**une partie de l'air chaud de la chambre de combustion est dérivée pour chauffer l'installation de réduction catalytique (9).

6. Procédé selon la revendication 5, **caractérisé en ce que** l'air chaud de la chambre de combustion est amené au gaz d'échappement préalablement épuré en aval de l'échangeur de chaleur (13) en amont du catalyseur de l'installation de réduction (9) catalytique.

7. Procédé selon la revendication 1 ou 5, **caractérisé en ce que** la température à laquelle l'installation de réduction catalytique (9) est chauffée est de 200°C à 450°C.

8. Procédé selon l'une quelconque des revendications précédentes, **caractérisé en ce que** pour l'installation de réduction catalytique (9), on utilise un catalyseur à base de dioxyde de titane.

9. Procédé selon la revendication 1, **caractérisé en ce que** l'addition du gaz d'échappement brut au gaz d'échappement préalablement épuré est régulée dans le gaz épuré sortant de l'installation de réduction catalytique (9).

10. Procédé selon l'une quelconque des revendications précédentes, **caractérisé en ce que** le gaz d'échappement contient, en plus de l'ammoniac, des composés de soufre et/ou organiques servant de substance odorante.

11. Procédé selon l'une quelconque des revendications précédentes, **caractérisé en ce que** le cas échéant après avoir extrait une partie de sa chaleur, le gaz épuré sortant hors de l'installation de réduction catalytique (9) est amené à un autre gaz d'échappement chargé d'une substance odorante pour dégager sa chaleur résiduelle.

12. Procédé selon la revendication 11, **caractérisé en ce que** l'autre gaz d'échappement chargé d'une substance odorante est épuré dans une autre installation de postcombustion (24) thermique régénérative.

13. Utilisation du procédé selon l'une quelconque des revendications précédentes pour des gaz d'échappement avec une teneur en ammoniac de plus de 1 g/m³.

14. Utilisation du procédé selon l'une des revendications 1 à 12 pour épurer des gaz d'échappement dans l'industrie de traitement du cuir.

15. Dispositif de mise en oeuvre du procédé selon l'une des revendications 1 à 12, **caractérisé par** une conduite de gaz brut (1) par laquelle le gaz d'échappement brut est amené à une installation de postcombustion (3) thermique régénérative, le gaz d'échappement préalablement épuré sortant hors de l'installation de postcombustion (3) thermique régénérative est amené via une conduite (8) à une installation de réduction catalytique (9), et par une conduite de bifurcation (17) pour dériver une partie du gaz brut dans la conduite de gaz brut (1) vers le gaz d'échappement préalablement épuré dans la conduite (8).

16. Dispositif selon la revendication 15, **caractérisé par** une conduite (15) raccordée à la chambre de combustion (6) de installation de postcombustion (3) thermique régénérative pour dériver une partie de l'air chaud de la chambre de combustion pour chauffer l'installation de réduction catalytique (9).

17. Dispositif selon la revendication 16, **caractérisé en ce que** la conduite (15) raccordée à la chambre de combustion (6) débouche dans la conduite en aval de l'échangeur de chaleur (13) pour le gaz d'échappement préalablement épuré.

18. Dispositif selon la revendication 15, **caractérisé en ce que** dans la conduite de gaz épuré (14), en aval de l'installation de réduction catalytique (9), est prévu un appareil de mesure (18) d'oxyde azotique et dans la conduite de bifurcation (17) est prévue une soupape (19) qui est pilotée par l'appareil de mesure (18) d'oxyde azotique.
